# EUROPEAN PATENT APPLICATION

(11) **EP 2 554 946 A1**
(43) Date of publication of application: **06.02.2013**
(21) Application number: 11006469.8
(22) Date of filing: 05.08.2011
(51) Int. Cl.: G01C 21/32, G01C 21/34, G09B 29/10

(54) **Separation of map and software for route calculation and navigation in a navigation system**

(71) Applicant: Harman Becker Automotive Systems GmbH, 76307 Karlsbad (DE)
(72) Inventor: Vorländer, Peter, 22337 Hamburg (DE)
(74) Representative: Grünecker, Kinkeldey, Stockmair & Schwanhäusser

(57) **Abstract**

The present invention relates to a digital map for use in route calculation in a navigation system, which comprises digital map data, and is characterized in that the digital map comprises an algorithm for searching the digital map data.

## Description

### Field of the Invention

The present invention relates to a map for use in route calculation in a navigation system. In particular, the invention provides for dividing map data and software for route calculation. Moreover, the invention may serve as basis for defining a standard of map meta-data for route calculation. In this context, the term "dividing" means terminating a strong relationship between the map data and the software for route calculation.

### Background Art

In conventional navigation systems there is a strong coupling between map data and the software using the map data for route calculation. With the limited resources of a navigation system, long distance routes cannot be calculated on the full network within acceptable time, so route calculation relies on the existence of higher routing levels satisfying certain constraints to reduce the search space and to produce search results within a few seconds. However, the logic behind this additional information is typically encoded in the software. This introduces a strong coupling between map data containing special information and the software evaluating this information to speed up the route calculation.

Therefore, map data of different vendors is not compatible with navigation systems of other vendors. In many cases even different navigation systems of the same vendor are not compatible with all maps offered by the same vendor.

It is, therefore, an object of the present invention to provide a digital map for route calculation which allows for compatibility irrespective of the navigation system. In other words, it is an object of the present invention to provide a digital map for route calculation which can be used in any navigation system.

### Description of the Invention

The above-mentioned object is achieved by the digital map for use in route calculation in a navigation system according to claim 1. The digital map according to the invention comprises digital map data, and is characterized in that the digital map data comprise an algorithm for searching the digital map data.

A navigation system may comprise, for example, a navigation device and a base station, wherein the navigation device can be one of a navigation device installed in a vehicle, a mobile navigation device, a mobile phone, a Personal Digital Assistant (PDA), a portable terminal, and a home computer.

The navigation system may include an input unit and a display unit. The input unit allows a user, for example, to input a destination or to select one route of a set of determined routes. The display unit may display a calculated route to a user. The navigation system may comprise a unit with a database and a Global Positioning System (GPS) navigation device for acquiring position data to determine a current position of the navigation device, for example, on a road represented in map data of the database. A receiving unit of the navigation system may receive signals from satellites and determine the transit time of the signal. Based on the signal transit time, the current position of the user of the navigation system is determined. The current position of the user can also be determined by determining acceleration and velocity of the navigation device. Using the database, the navigation device is able to calculate a route from the current position to another location and guide the user accordingly. The database may be located distant from the navigation device.

The navigation system may include application programs. For example, a route calculation program is a program for calculating a route from a current location of the navigation device to a destination. Determining a route from a current location to a destination based on the database implies calculating the route by using the information stored in the database in a navigation algorithm. The calculation of a route can be based on a cost function and cost values depending on data in the database. The employment of cost functions in route calculation is, in principal, known to a skilled person.

The digital map data of the digital map may be stored in the database. The database may hold the digital map data. The digital map data may include road network data, road segments, and regional data. The digital map data may comprise information for calculating routes including public transportation. Further, the digital map data may comprise information for calculating routes for bicycles. It is also conceivable that the digital map data comprise information for calculating routes for wheelchairs. In addition, the digital map may provide data for calculating routes for pedestrians or walkers. The digital map data may be used by route calculation software for calculating a combined route. A combined route, for example, allows a user of the navigation device for reaching a destination by driving a vehicle, using public transportation and walking. The digital map data may include information of points-of-interest or other data of particular interest, for example hotels and gas stations, when using the digital map for navigation. The digital map may include three-dimensional environmental data. For example mountains and buildings can be represented in the digital map data as three-dimensional objects with an indication of height. Differences of elevation of a road may be of interest for a driver of a vehicle when searching for an optimal route.

The digital map data may be updated in regular terms or arbitrarily by a user of the navigation system.

The entirety of the digital map data constitutes a search space, for example, the choice set of all roads in Europe. However, the data of the digital map according to the invention is not limited thereto. Route calculation software in the navigation device searches the search space in order to calculate an optimal route.

The digital map comprises an algorithm for searching the digital map data. The algorithm for searching the digital map data included in the digital map searches the digital map data before route calculation software in the navigation device may search the entire search space. The algorithm for searching the digital map data preselects the digital map data according to determined constraints. Thereby, the algorithm for searching the digital map data reduces the search space. Then, the already searched digital map data may be used by the route calculation software for calculating a route from a current location of the navigation device to a destination. For example, a route can be calculated for vehicles such as automobiles or bicycles, and/or for pedestrians.

In general, the calculation of an optimized route in a navigation system may be performed by a Dijkstra's Algorithm, in particular an A*-Algorithm. Runtime of the algorithm may be more efficiently by combining known road segments in a major segment. The major segment is then considered in the algorithms instead of many known and smaller road segments. A route may be determined based on the digital map data according to particular criteria selected by a user of the navigation system.

Route calculation in navigation systems is usually based on weighting road segments and intersections by using cost values. Based on the digital map data the cost values may be defined or modified according to a user's criteria. For example, the user prefers the shortest route and shortest travel time for arriving at a destination. For each road segment the length may be determined. A cost value corresponding to the length of the road segment may be assigned to each road segment. The route may be calculated based on a total cost value determined by summarizing the cost value of the respective travel time and the cost value corresponding to the length.

By reducing the search space, the A*algorithm for calculating the optimal route is speed up. The digital map according to the invention has the advantage that a digital map for use in route calculation is provided which is compatible with any navigation system. Since the algorithm for searching the digital map data is part of the digital map, the digital map data can be processed by any software for route calculation and is compatible with any navigation system.

According to an embodiment of the above described digital map, the digital map comprises further data for navigation such as data of restaurants, data of post offices, data of grocery stores, data of comfort stations, and data of public transportation. For example, the data of public transportation may contain the availability of trains, busses, airplanes and ships. Further, the data may contain information about time schedules and stations of the public transport means. The data of grocery stores may relate to the number and location of the grocery stores available along a route to be calculated, or in a determined geographical region. The data of restaurants may comprise the kind of restaurants, the kind of food offered in the restaurants, opening and closing time, and the location of the restaurants. The information may also contain the number of restaurants along a route to be calculated or in a geographical region. The data of comfort stations may include information where comfort stations are located along a route to be calculated or in a geographical region. The data of post offices may contain the information where post offices are located and opening and closing time thereof.

The algorithm for searching the digital map data may evaluate the information provided by the digital map according to criteria set by a user such that wide spectrums of application of the digital map result. For example, the user of the navigation system may prefer a route from a current location to a destination which guides the user over a comfort station, wherein the comfort station may be a stopover along the route to be calculated.

According to a further embodiment of the invention, the digital map data are stored in one or more search tree data structure(s) in the digital map. In a tree data structure, the digital map data may be modelled as one or more search trees.

The digital map data may include nodes, edges, road segments, links, and/or attributes. Nodes may represent for example intersections of roads, the end of a road, or curve points in the one or more search trees. An edge may represent a road segment in the one or more search trees. A road segment may characterize a part of a road. In other words, the road segment is a portion of a road and identifies a determined length of the road. An edge may connect two nodes in the one or more search trees. A curve point may serve for determining the exact course of a road segment. Attributes include further information such as, for example, the coordinates of a current position of the navigation device.

The one or more search trees may contain a set of linked nodes in hierarchical order. In general, a node is a structure which may contain a value, a condition, or represent a separate data structure. Each node in a search tree has either none or one or more than one child nodes. A node which has a child node is the child's parent node. Children nodes of each node have a specific order. Nodes which do not have any children are so-called leaf nodes. A node can have a height. The height of a node is the length of the longest downward path to a leaf node from that node. A node can have a depth. The depth of a node is the length of the path to its root node. The root node is the topmost node in the search tree and has no parent nodes. The root node is the node at which operations on the search tree commonly begin. There are also algorithms which begin with a leaf node and work up ending at the root node. All nodes can be reached from the root node by following edges or links. The one or more search trees may consist of sub trees.

The one or more search trees cover all of the data in the digital map. For example, data of roads, data of intersections of roads, and data of traffic connections in the digital map data are represented by the one or more search trees.

Tree-traversal refers to the process of visiting/evaluating each node in a tree data structure, exactly once, in a systematic way. The traversals may be classified by the order in which the nodes are visited. In general, there are different traversal methods for traversing through the elements of a search tree. For example, each parent node may be traversed before its children. Alternatively, the children may be traversed before their respective parents.

For example, an algorithm for traversing or searching a tree, tree structure or a graph starts at an initial or a root node, and explores as far as possible along each branch until reaching a leaf node.

Common operations which can be generally performed on a search tree may be the following: finding the root for any node, enumerating all the items of the search tree, enumerating a section of the search tree, searching for an item of the search tree, adding a new item at a certain position on the search tree, deleting an item of the search tree, adding a whole section to the search tree, and removing a whole section of the search tree. The operation of removing a whole section of the search tree is called "pruning".

Different algorithms have been developed for searching a search tree. The A*-Algorithm, for example, is an algorithm which may traverse a search tree in order to find the least-cost path from a given initial node to one goal node. When running the A*-Algorithm, all nodes and paths of the search tree representing the search space are traversed. As mentioned above, the A*Algorithm may be used for calculating a route.

According to a further embodiment of the invention, the algorithm for searching the digital map data is an algorithm for pruning a search tree. The algorithm for pruning the search tree traverses the search tree in a special order. Thereby, the algorithm for pruning the search tree removes sections of the search tree and thus, reduces the size of the search tree and the search space, respectively. The algorithm for pruning the search tree may yield a final search tree with an optimal size. For example, road data which are not relevant for the process of route calculation may be pruned.

A digital map of Europe, for example, provides digital map data of all road networks of European countries. The digital map data may be modelled as a search tree data structure with a plurality of sub trees. Each sub tree may correspond to the road network of one country in Europe. The digital map data of Europe correspond to the entire search space. When a user of the navigation system inputs a search in the input unit for an optimal route from London to Paris, the algorithm for pruning the digital map data removes all the sub trees which do not correspond to the road network of either England or France. This is a very simple example for reducing the search space by the algorithm for pruning the digital map data. The route calculation may be performed by the A*-Algorithm on the basis of the reduced search space.

The reduced search space may alternatively correspond to digital map data representing a set of candidate routes. Based on the reduced search space a route may be calculated by route calculation software in the navigation device of the navigation system.

The algorithm for pruning the digital map data may be performed according to different pruning strategies. For example, the pruning strategy may be one of frc-based pruning of the search tree, rank based pruning of the search tree, and edge flag based pruning of the search tree.

Since the algorithm for pruning the digital map data is included in the digital map, thus, pruning is part of the digital map data. The claimed method breaks the strong coupling between map data and the algorithm for route calculation. The digital map according to the present invention is independent of the navigation system and can be used in any navigation system irrespective of the producer or vendor of the navigation system. Since the algorithm for pruning the digital map data is included in the digital map, the digital map is compatible with navigation systems of different producers and vendors.

According to a further embodiment of the invention, the digital map comprises meta-data and the algorithm for searching the digital map data is encoded in the meta-data of the digital map. The meta-data of the digital map may provide information about one or more aspects of the digital map data. Aspects of the digital map data may be creation date, complexity and coverage of the digital map data.

The algorithm for searching the digital map data may be encoded, for example, in a meta-data block in the digital map.

In this way, the coupling between map data and routing algorithm is broken. Since the pruning strategy is part of the digital map, the digital map is compatible with any navigation system.

According to a further embodiment of the digital map according to the invention, the algorithm for searching the digital map data is encoded with an expression language. For example, simple functions can be encoded to answer the question which links can be omitted when calculating a route for a given start and a given destination. In the digital map, different pruning strategies may be defined according to different levels of quality and speed-up. In this case, there is only one method
Bool canBeSavelyOmitted (Start start, Destination dest, Link link)
that is being expressed in the expression language designed especially for this purpose. Almost all pruning strategies can be reduced to an implementation of this answer.

The pruning strategy for route calculation can be encoded in the meta-data of the map. The meta-data containing the algorithm can be encoded with the expression language.

This has the advantage that the algorithm for searching the digital map data encoded with the expression language can be parsed simple and efficiently. In addition, the digital map data are evaluated efficiently.

According to a further embodiment of the digital map according to the invention, the algorithm for searching the digital map data is an algorithm for searching the digital map data according to a stack-based evaluation strategy. In general, a stack is a last in/first out abstract data type and data structure. A stack can be characterized by three fundamental operations: push, pop, and stack top. The push operation may add a new item to the top of the stack. The pop operation may remove an item from the top of the stack. The stack top operation may get the data from the top-most position and returns it to the search tree without deleting it. A stack can be implemented through a linked list.

The search tree may be traversed in a special order and the elements of the search tree may be placed in a stack. For example, the algorithm stores two path segments from an initial node in a stack and selects from the stack the path segment which satisfies a certain constraint and extends it to its children nodes. The extended paths are placed in the stack and the parent path is removed. This process continues. In each iteration, the algorithm finds the most likely path in the stack, extends it to all its possible children nodes, and places the extended paths in the stack. The algorithm terminates when the most likely path in the stack reaches a leaf node of the tree.

According to a further embodiment of the invention, the digital map further comprises additional information for searching the digital map data, wherein the additional information is at least one of a rank and edge flags. The additional information may be used by the algorithm for searching the digital map data. The algorithm for searching the digital map data may be an algorithm for pruning the search tree. The pruning algorithm may prune the search tree according to a specific pruning strategy. For example, the search space may be reduced by the pruning algorithm by using rank information. Alternatively, the pruning strategy may use edge flags information for reducing the search space.

The digital map may comprise additional information which is used by the algorithm for searching the digital map data. The additional information relates to constraints and instructions needed for reducing the search space. For example, the algorithm for searching the digital map data removes sections of the search tree which do not satisfy a certain constraint. Removed sections of the search tree are no longer considered by the algorithm, since the removed sections are considered not to contain the searched data. The algorithm for searching the digital map data traverses the search tree in a special order. The algorithm for searching the digital map data yields a final tree with an optimal size. For example, in case the digital map comprises road data of Europe but a route is to be calculated through England, the final tree with the optimal size may comprise the road data of England. In the example, sub trees, which are considered not to contain data corresponding to the road network of England, are removed by the pruning algorithm.

Since the digital map provides additional information which can be evaluated by the respective algorithm for searching the digital map data which in turn is part of the digital map data, the digital map data can be pre-processed independently from the software for route calculation. Hence, the digital map according to the invention provides an enhanced compatibility between map data and software for route calculation.

According to a further embodiment of the invention, the digital map comprises more than one algorithms for searching the digital map data. For example, the digital map may include an algorithm for pruning according to a specific pruning strategy and an algorithm for a stack-based evaluation of the digital map data. Alternatively, the digital map may include different algorithms for pruning, wherein each algorithm prunes the digital map data according a specific pruning strategy. The pruning strategy of one algorithm differs from the pruning strategy of another algorithm. As a further alternative, the digital map may provide algorithms for different pruning strategies and an algorithm for a stack-based evaluation of the digital map data.

The present invention also provides a method for calculating a route in a navigation system. The method for calculating the route in a navigation system comprises the steps of providing a digital map according to the invention, and calculating the route based on the digital map.

The digital map according to the invention includes digital map data and an algorithm for searching the digital map data. The algorithm for searching the digital map data is part of the digital map. Providing the digital map including the algorithm for searching the digital map data in a navigation system may comprise loading the digital map into a memory of a navigation device or accessing a database containing the digital map by the navigation device.

A processor of the navigation system may access the digital map data. The processor may process the algorithm for searching the digital map data stored in the digital map. The entirety of the digital map data constitutes a search space. The processing of the algorithm for searching the digital map data may reduce the search space. Based on the reduced search space a route can be calculated by route calculation software stored in the navigation device of the navigation system.

The map data are used for calculating a route from a current position of the navigation device to a desired position. For example, a route can be calculated for vehicles such as automobiles or bicycles, and/or for pedestrians. The calculation of the route in the navigation system may be performed by a Dijkstra Algorithm, in particular by an A*Algorithm. For example, the algorithm for searching the digital map data included in the map reduces the search space in a first step, then the A*Algorithm calculates the route to be determined based on the reduced search space.

Since the algorithm for searching the digital map data is part of the map data containing the additional information needed by the algorithm for searching the digital map data, the claimed method breaks coupling between map data and routing algorithm. The digital map according to the invention is independent of the navigation system and can be used in any navigation system irrespective of the producer of the navigation system and the vendor of the map. Thus, the digital map according to the invention is compatible with any navigation system.

The present invention also provides a method for providing navigation information to a user of the navigation system comprising the method for calculating a route in a navigation system comprising the steps of providing a digital map according to the invention and calculating the route based on the digital map. The method for providing navigation information comprises further the step of providing the user of the navigation system with an optical and/or acoustical output including navigation information based on the calculated route.

A digital map includes digital map data and an algorithm for searching the digital map data. The digital map data define a search space which may be used for calculating a route. An algorithm for calculating a route, for example the A*-Algorithm, is an algorithm which traverses a search tree in order to find the least-cost path from a given initial node to one goal node. When running the A*-Algorithm, all nodes and paths of the search tree representing the search space are traversed.

A navigation device may access the digital map stored in a database of the navigation system.

The algorithm for searching the digital map data in the digital map may be processed by the navigation device. The processing of the algorithm for searching the digital map data reduces the search space.

Based on the reduced search space a route may be calculated.

A user of the navigation system is navigated according to the calculated route. The calculated route may be displayed on a display in order to navigate the user of the navigation system. Alternatively, the user of the navigation system may be navigated along the calculated route by voice. Alternatively, the user of the navigation system may be navigated by displaying the route on a display and by voice.

The present invention also provides a method for retrofitting a navigation system comprising a map and a processor for processing the data of the map, the method comprises the step of replacing the map by the digital map according to the invention.

Additional features and advantages of the present invention will be described with reference to the drawings. In the description, reference is made to the accompanying Figures that are meant to illustrate preferred embodiments of the invention. It is understood that such embodiments do not represent the full scope of the invention.
Figure 1 is a flow chart illustrating the application of the invention.
Figure 2 is an example for FRC-based pruning of search tree.
Figure 3 is an example for Rank based pruning of search tree.
Figure 4 is an example for Edge Flags based pruning of search tree.

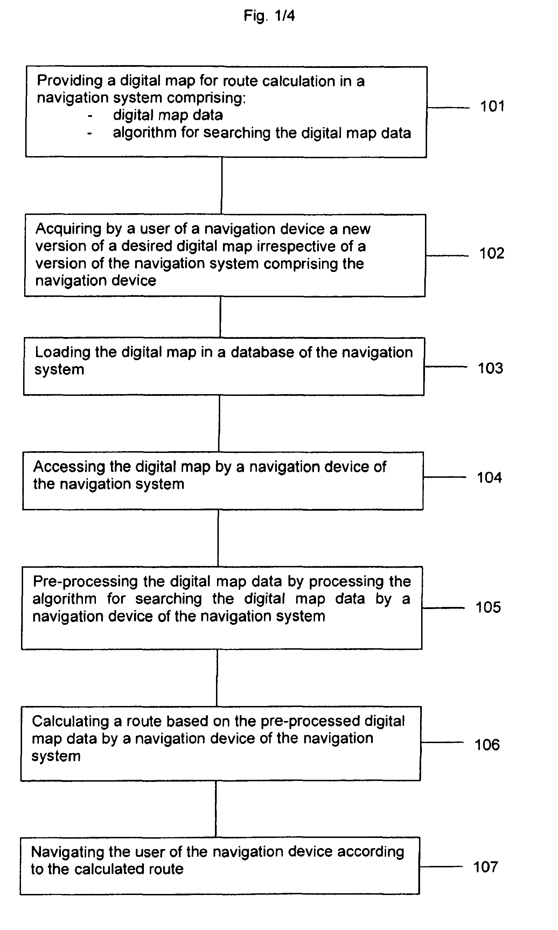

In the present invention, Figure 1 illustrates a flow chart of an application of the invention. The process of applying the present invention starts with step 101 of providing a digital map for route calculation in a navigation system comprising digital map data and an algorithm for searching the digital map data. In step 102, a user of a navigation device acquires a new version of a desired digital map provided in step 101 irrespective of a brand and version of the navigation system comprising the navigation device.

In step 103, the digital map is loaded in a database of the navigation system. In step 104, a processor in the navigation device of the navigation system accesses the digital map. For example, the processor reads the algorithm for searching the digital map data. The algorithm for searching the digital map data may be stored in a meta-data block in the digital map.

In step 105, the digital map data are pre-processed by processing the algorithm for searching the digital map data. The algorithm for searching the digital map data may be an algorithm for pruning a search tree. The digital map data may be configured in the form of one or more search trees. The processor in the navigation device of the navigation system may process the algorithm for pruning the one or more search trees. The digital map data may include several algorithms for pruning a search tree according to different pruning strategies.

Alternatively, the digital map may provide an algorithm for pruning a search tree according to one pruning strategy selected of possible pruning strategies.

In case the digital map offers several algorithms for pruning the one or more search trees, the algorithms for pruning the digital map data may be defined according to different levels of quality and speed-up of routing in the navigation device of the navigation system. The pruning strategies comprise for example algorithms for frc-based pruning of a search tree, for a rank based pruning of a search tree, and an edge flags based pruning of a search tree. The digital map data may contain additional information needed for processing the algorithms for pruning the digital map data according to different pruning strategies. The processor in the navigation device of the navigation system may run one of the offered pruning strategies in the digital map.

The information contained in the digital map data constitutes the search space for the algorithm for searching the digital map data. The information contained in the digital map data such as, for example, a road network, is configured in the form of one or more search tree structures. When the algorithm for pruning the one or more search trees is processed, the one or more search trees are traversed in a special order. Thereby, the algorithm for pruning the one or more search trees searches for finding an object with specified properties. All parts of the search tree structures which are considered not to contain the searched object are "cut off'.

The algorithm for pruning the one ore more search trees reduces the search space formed by the digital map data.

In step 106, routing software in the navigation device of the navigation system may calculate a route based on the pre-processed digital map data.

In step 107, a user of the navigation device may be navigated according to the calculated route.

The digital map contains both, additional information for processing an algorithm for searching the digital map data and the algorithm itself. Since the algorithm for searching the digital map data is included in the digital map instead of being included in the routing software of a navigation device, it is not necessary for a user to mind compatibility, i.e. to take into account which kind of search algorithm is included in the routing software of his/her navigation device, when buying a new version of a digital map for route navigation. The digital map according to the invention is compatible with any navigation system.

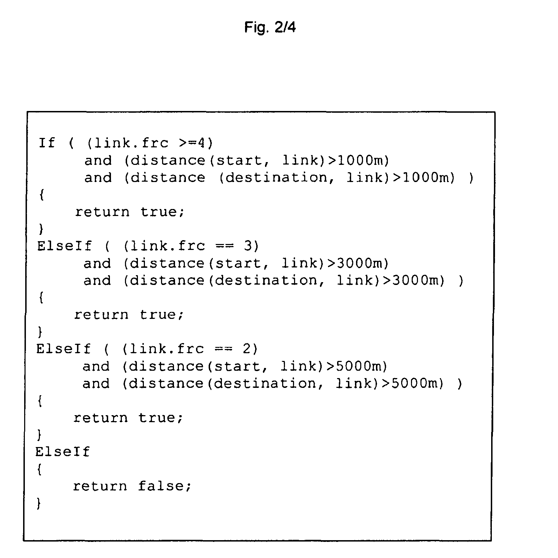

In Figures 2 - 4, examples are given for different algorithms for different pruning strategies.

Figure 2 illustrates exemplarily an algorithm for frc-based pruning of a search tree. The algorithm for the frc-based pruning of the search tree may be encoded in the digital map data. In particular, the algorithm may be encoded in a meta-data block of the digital map.

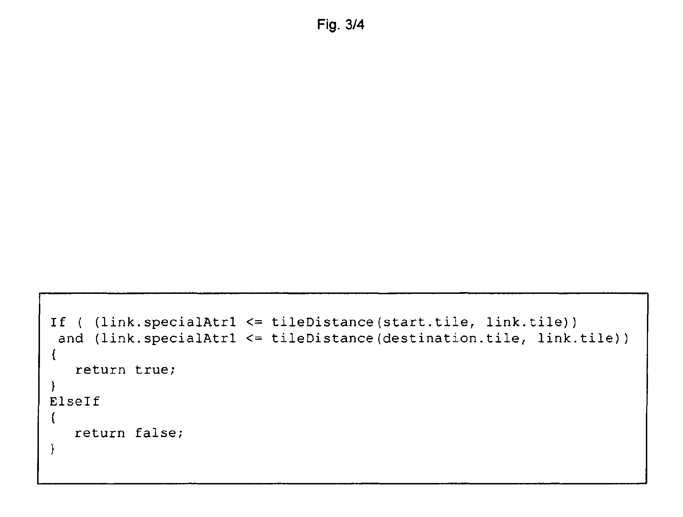

Figure 3 illustrates exemplarily an algorithm for a rank based pruning of a search tree. A special attribute 1 containing the rank is included as additional information in the digital map by a map vendor. The code illustrated in Figure 3 shows how to use this information to prune the search tree for route calculation. The algorithm for rank based pruning of the search tree may be encoded in the digital map data. In particular, the algorithm may be encoded in a meta-data block of the digital map. Both, the additional information of ranks and the algorithm for pruning are included in the digital map.

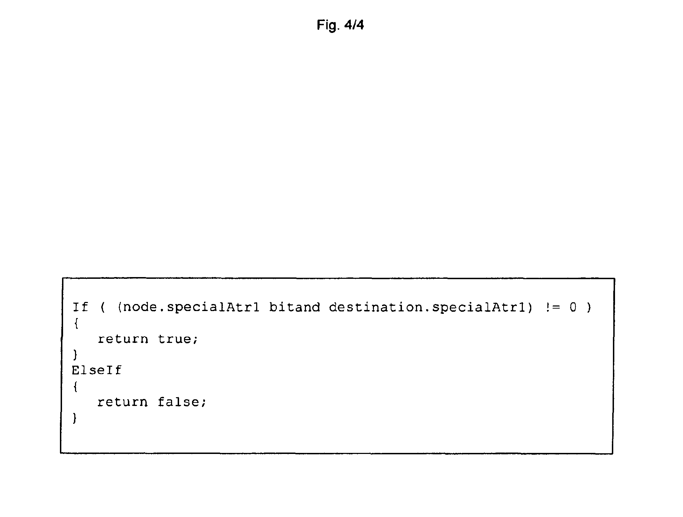

Figure 4 illustrates exemplarily an algorithm for edge flags based pruning of a search tree. For running an algorithm for edge flags based pruning of a search tree, additional information is included in the digital map in the form of attributes. A special attribute 1 contains a bitvector for edge flags. The algorithm for edge flags based pruning of the search tree may be encoded in the digital map data. In particular, the algorithm may be encoded in the meta-data block of the digital map.

A stack-based evaluation strategy may be used as a preferred strategy for evaluating a search tree in the digital map data. The stack-based evaluation strategy is employed in virtual machines. Due to simplicity of expressions such a virtual machine may be very easy and simple. Many compilers use a stack for parsing a syntax of expressions, program blocks etc. before translating into low level code.

As shown in Figures 2 - 4, one or more algorithms for pruning according to different pruning strategies for route calculation may be encoded in the meta-data of a digital map. The meta-data may be encoded with an expression language which is designed especially for this purpose.

The algorithm for pruning the one or more search trees comprises functions for determining the optimal size of the final search tree structure. The expression language may be used to encode the functions to answer the question, which links can be omitted when doing routes calculation for a given start and a given destination.

The expression language allows at least basic arithmetic for integers and floating point numbers, Boolean arithmetic, access to Attributes of links and intersections, distance calculation for points, distance calculation for tiles, if-then-else conditions, and local variables. The distance calculation for points may comprise various metrics such as Euclidean, Manhattan-Metric, and Maximum-Metric. The distance calculation for tiles may also comprise various metrics such as Euclidean, Manhattan-Metric, and Maximum-Metric.

The expression language can be defined in order to achieve simple and efficient parsing of the encoded algorithm, and efficient evaluation of the digital map data.

Any processor in a navigation device of a navigation system may run the algorithm for searching the digital map data that is included in the digital map, for example encoded as meta-data in a meta-data block of the digital map. Since the algorithm for searching digital map data is part of the digital map, the digital map according to the invention is compatible with any navigation system.

Encoding the algorithm to prune the search tree in the digital map data may result in code that might be slower than optimized, hardware dependent code. However, this overhead is small in the most cases, as the strategies for pruning are typically simple and the computation time is very low compared to database access and the route calculation itself.

## Claims

1. A digital map for use in route calculation in a navigation system, comprising:
digital map data;
**characterized in that**
the digital map comprises an algorithm for searching the digital map data.

2. The digital map of claim 1 further comprising data for navigation such as data of restaurants, data of post offices, data of grocery stores, data of comfort stations, and data of public transportation.

3. The digital map of one of claims 1 or 2, wherein the digital map data are stored in one or more search tree data structures in the digital map.

4. The digital map of one of claims 1 - 3, wherein the algorithm for searching the digital map data is an algorithm for pruning a search tree.

5. The digital map of one of claims 1 - 4, wherein the digital map further comprises meta-data, and wherein the algorithm for searching the digital map data is encoded in the meta-data of the digital map.

6. The digital map of one of claims 1 - 5, wherein the algorithm for searching the digital map data is encoded with an expression language.

7. The digital map of one of claims 1 - 6, wherein the algorithm for searching the digital map data is an algorithm for searching the digital map data according to a stack-based evaluation strategy.

8. The digital map of one of claims 1 - 7 further comprising additional information for searching the digital map data, wherein the additional information is at least one of a rank and edge flags.

9. The digital map of one of claims 1 - 8, wherein the digital map comprises more than one algorithms for searching the digital map data.

10. A method for calculating a route in a navigation system, the method comprising:
providing a digital map according to one of claims 1 - 9, and
calculating the route based on the digital map.

11. A method for providing navigation information to a user of the navigation system comprising the method for calculating a route in a navigation system according to claim 10, and
providing the user with an optical and/or acoustical output including navigation information based on the calculated route.

12. A method for retrofitting a navigation system comprising a map and a processor for processing the data of the map, comprising the step of:
replacing the map by the digital map according to one of claims 1 - 9.
